# EUROPEAN PATENT APPLICATION

(11) **EP 1 964 896 A2**
(43) Date of publication of application: **03.09.2008**
(21) Application number: 08151646.0
(22) Date of filing: 20.02.2008
(51) Int. Cl.: C09D 11/00, B41J 11/00

(54) **Ink-jet ink and ink-jet recording method**

(30) Priority: 28.02.2007 JP 2007048774
(71) Applicant: Konica Minolta Holdings, Inc., Tokyo 100-0005 (JP)
(72) Inventor: Nakamura, Masaki, Tokyo Tokyo 191-8511 (JP); Ohkubo, Kenichi, Tokyo Tokyo 191-8511 (JP)
(74) Representative: Gille Hrabal Struck Neidlein Prop Roos

(57) **Abstract**

An ink-jet ink comprising: Polymer A which comprises a plurality of side chains including a side chain "a" which is capable of producing a radical therein; and Polymer B which comprises a plurality of side chains including a side chain "b", wherein the side chain "b" has a polymerizable group which has reactivity of addition reaction with the radical produced in the side chain "a" of Polymer A.

## Description

This application is based on Japanese Patent Application No. 2007-048774 filed on February 28, 2007 with Japan Patent Office, the entire content of which is hereby incorporated by reference.

### TECHNICAL FIELD

The present invention relates to an ink-jet ink which incorporates polymers forming a gel via exposure to active energy rays, and an ink-jet recording method employing the aforesaid ink.

### BACKGROUND

An ink-jet recording method enables recording of highly detailed images, employing a relatively simple method and has made rapid development in each of the aspects. Further, it is applicable to versatile fields, and media or inks which match each object are employed.

Specifically, in recent years, the recording rate has been significantly enhanced, and printers have been developed which exhibit performance which is durable for application to shortrun printing. However, in ink-jet printers, in order to bring out their performance, ink-jet exclusive paper provided with ink absorbability is required.

When recording on coated paper or art paper which exhibits low ink absorption, or on plastic film which exhibits no ink absorption, drawbacks have occurred which include so-called color bleeding which is caused via mixing of different color liquid ink compositions on the recording medium. The above has been a problem in terms of realizing diversification for recording media for ink-jet recording.

In recent years, proposed as ink-jet inks which are applicable to these recording media are those which incorporate polymers (refer to Patent Documents 1 and 2) in which reactive side chains, with respect to the main chain (called also as "a backbone"), such as polyvinyl alcohol, are subjected to modification and result in increase in viscosity or curing via exposure to active energy rays. These ink-jet inks are discharged onto recording media and subsequently exposed to active energy rays, whereby bleeding is minimized via an increase in viscosity of the ink. Further by volatilizing solvents, printed matter, which exhibits excellent image flatness and glossiness even on the above recording media which exhibit poor absorption is obtained.

However, due to incorporation of polymers in these ink-jet inks, when they dry at the surface of nozzles, their viscosity tends to increase. Specifically, under printing environments where ink tends to dry, intermittent ejection and maintenance properties of the ink-jet heads are degraded and problems occur in which ejection load tends to increase. In order to overcome the above problems, the content of the polymers is decreased. However, on the other hand, characteristics of an increase in viscosity, during exposure to active energy rays are degraded, whereby problems occur in which it is difficult to satisfy both ejection properties and viscosity increasing characteristics.
(Patent document 1) Japanese Patent Publication Open to Public Inspection (hereinafter referred to as JP-A) No. 2004-189841
(Patent Document 2) JP-A No. 2000-181062
(Patent document 3) WO No. 2006/080139
(Patent document 4) WO No. 2005/012448

In view of the foregoing, the present invention was achieved. An object of the present invention is to provide an ink-jet ink which satisfies both ejection properties and viscosity increase characteristics when exposed to active energy rays, and further enables excellent recording onto recording media of poor absorption, and an ink-jet recording method employing the aforesaid ink-jet ink.

The above object of the present invention is achievable via the following embodiments.
(1) one of the aspects of the present invention is an ink-jet ink comprising:
   Polymer A which comprises a plurality of side chains including a side chain "a" which is capable of producing a radical therein; and
   Polymer B which comprises a plurality of side chains including a side chain "b", wherein the side chain "b" has a polymerizable group which has reactivity of addition reaction with the radical produced in the side chain "a" of Polymer A.
(2) Another aspect of the present invention is an ink-jet ink of the above-described item 1,
   wherein the side chain "a" comprises a partial structure derived from acetophenone.
(3) Another aspect of the present invention is an ink-jet ink of the above-described items 1,
   wherein the side chain "a" comprises a partial structure represented by Formula (1): 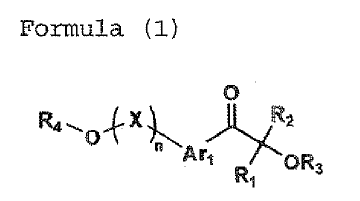 wherein X is a bivalent linking group; n is an integer of 0 or 1; Ar₁ is a substituted or unsubstituted aryl group; R₁ and R₂ each are a hydrogen atom or an alkyl group having 1-3 carbon atoms, provided that R₁ and R₂ may be jointed to form a ring; and R₃ and R₄ each are a hydrogen atom or a substituent.
(4) Another aspect of the present invention is an ink-jet ink of any one of the above-described items 1-3,
   wherein Polymer A has a main chain of a saponified polyvinyl acetate.
(5) Another aspect of the present invention is an ink-jet ink of any one of the above-described items 1-3,
   wherein Polymer B has a main chain of a saponified polyvinyl acetate.
(6) Another aspect of the present invention is an ink-jet ink of any one of the above-described items 1-3,
   wherein each of Polymer A and the Polymer B has a main chain of a saponified polyvinyl acetate.
(7) Another aspect of the present invention is an ink-jet ink of any one of the above-described items 1-6,
   wherein Polymer B has an weight average molecular weight of 5,000 to 60,000.
(8) Another aspect of the present invention is an ink-jet ink of any one of the above-described items 1-6,
   wherein Polymer B has a modification ratio of the side chains therein from 0.5 to 10 mol%.
(9) Another aspect of the present invention is a method of recording an ink-jet image comprising the steps of:
   ejecting droplets of ink-jet ink of any one of the above-described items 1-8 onto a recording medium; and
   irradiating the droplet of the ink-jet ink ejected on the recording medium with active energy rays.
(10) Another aspect of the present invention is a method of recording an ink-jet image comprising the steps of:
   ejecting droplets of the ink-jet ink of any one of the above-described items 1-8 onto a recording medium;
   irradiating the droplet of the ink-jet ink ejected on the recording medium with active energy rays; and
   subjecting the irradiated droplet of the ink-jet ink ejected on the recording medium with active energy rays to a drying process.

The present invention has enabled to provide an ink-jet ink which satisfies both ejection properties and viscosity increase characteristics when exposed to active energy rays, and further has enabled excellent recording onto recording media of poor absorption, and an ink-jet recording method employing the aforesaid ink-jet ink.

### DESCRIPTION OF THE PREFERRED EMBODIMENTS

The preferred embodiments to practice the present invention will now be detailed.

In view of the above problems, the inventors of the present invention conducted diligent investigations. Reasons why viscosity characteristics of copolymers in which reactive side chains were modified under low ejection load conditions, specifically conditions in which the content of polymers in an ink-jet ink (hereinafter also referred simply to as an ink) is low, or the molecular weight is relatively low, were degraded during exposure to active energy rays, were analyzed employing several analytical methods. As a result, it was discovered that under the conditions described above, since the distance between the reactive side chains of different molecules increased, as shown in the following Reaction Formula (1), frequency of Intermolecular Crosslinking Reaction (I) decreased, while Intramolecular Crosslinking Reaction (II) tended to occur.

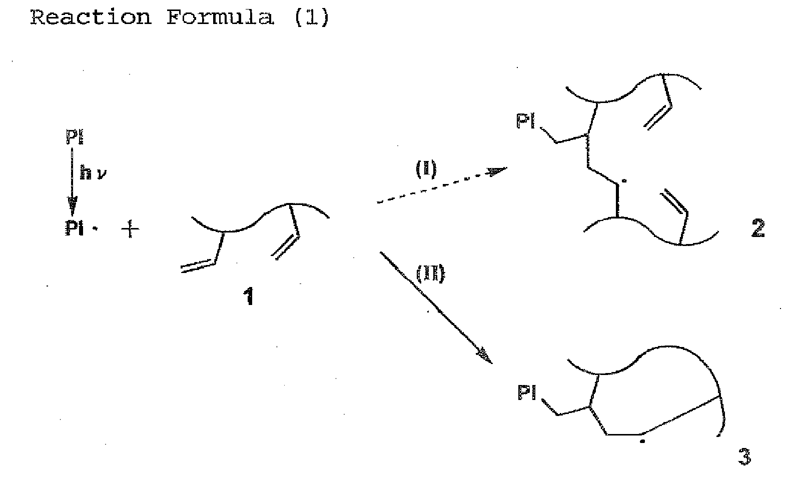

In above Reaction Formula (1), PI represents a photoinitiator and PI. represents a photoinitiator which has generated a radical, while 1 represents a polymer having reactive groups (polymerizable groups) in the side chains, 2 represents a polymer which is subjected to intermolecular crosslinking, and 3 represents a polymer which is subjected to intramolecular crosslinking.

It was assumed that due to a trend shown in above Reaction Formula (1), under the above conditions, the increase in molecular weight and formation of three dimensional crosslinking structures were not sufficiently realized, whereby the viscosity increasing efficiency during exposure to active energy rays decreased.

Based on the above analysis, the inventors of the present invention conducted various investigations on how the intermolecular crosslinking reaction was efficiently performed. As a result, the present invention was achieved. Namely, in the present invention, attention was paid to the reaction process of the photoinitiators employed in the conventional ink known in the art. It is characterized that Polymer A having a plurality of side chains exhibiting the function of photoinitiators. Further, it is characterized that the above side chains themselves, exhibiting the function of photoinitiators, generate radicals which exhibit addition reactivity for a polymerizable group. Further, by incorporating above Polymer A together with Polymer B having polymerizable groups in the side chains, under conditions in which the total content of the polymer is in a small amount, or the molecular weight is relatively low, the viscosity is efficiently increased via exposure to active energy rays, whereby it has become possible to easily design the compatibility in the decrease in ejection load and viscosity increasing characteristics.

An assumed mechanism to realize the effects of the present invention will now be described employing following Reaction Formula (2).

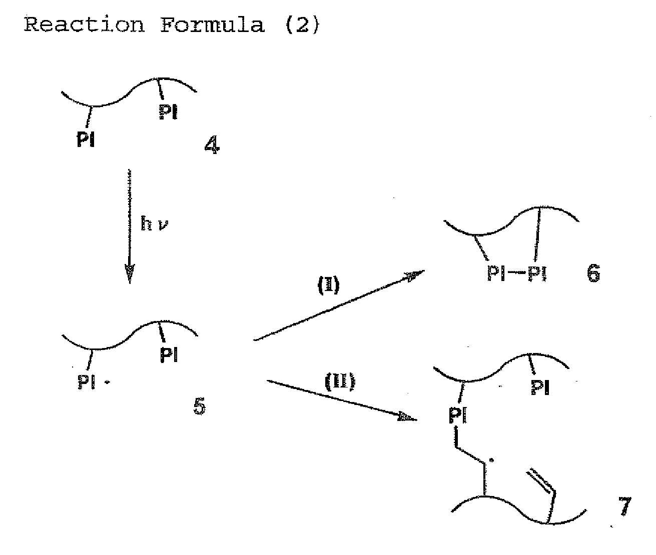

In above Reaction Formula (2), PI represents a photoinitiator and PI· represents a photoinitiator which has generated radicals, while 4 represents Polymer A, 5 represents Polymer A which generates radicals in side chains, 6 represents Polymer A which has undergone intramolecular crosslinking via radical recombination, and 7 represents a polymer which has undergone intermolecular crosslinking via the reaction of 5 (Polymer A which generates radicals in the side chains) and 1 (the polymer having reactive groups (polymerizable groups) in the side chains), described in Reaction Formula (1).

As shown in Reaction Formula (2), via exposure of active energy rays, addition reactive radical (5) is generated in a side chain of Polymer A. Since generally, the life of radical species is very short, it is rare that a plurality of radicals in the same molecule is simultaneously generated. Consequently, almost no formation of intramolecular crosslinking via recombination of radicals in the molecule occurs. It is assumed that under such a mechanism, it is possible to retard Intramolecular Crosslinking Reaction (I) in the initial stage of the reaction. Further, radical (PI·) generated in a side chain of Polymer A is added to the polymerizable side chain of another Polymer B, whereby via this Reaction (II), different polymers undergo intermolecular crosslinking. By incorporating the function of the photoinitiator into the polymer and combining two types of polymers, each of which functions differently, it is possible to accelerate the intermolecular crosslinking reaction. As a result, it is assumed that it has become possible to prepare ink which exhibits excellent viscosity increasing characteristics.

The present invention will now be detailed.

### (Polymer A)

Polymer A according to the present invention has, in its side chain "a", a plurality of structural portions which exhibit a function of a photoinitiator, and when exposed to active energy rays, is characterized to generate, in its side chain, a radical which exhibits addition reactivity to the polymerizable group.

Structural portions which function as photoinitiators include conventional photoinitiators known in the art, as well as their analogues. It is known that these photoinitiators are divided mainly into a "hydrogen extraction type" and a "cleavage type", as exemplified below.

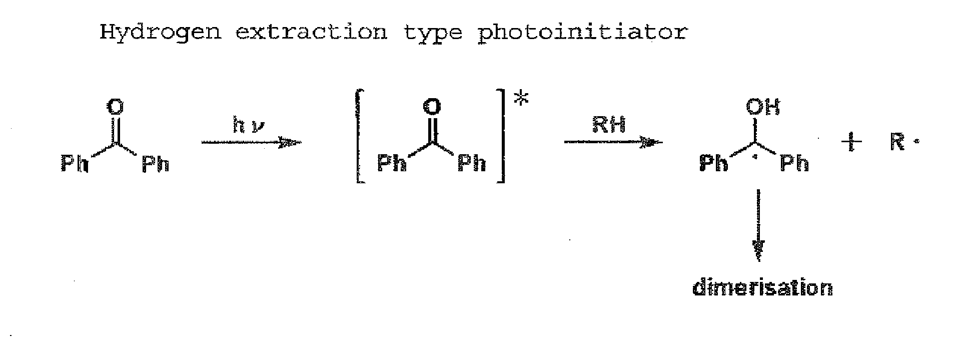

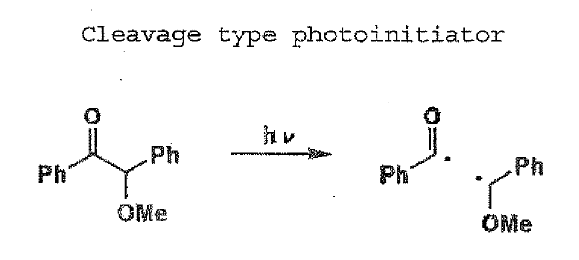

The former, hydrogen extraction type, is a type of photoinitiator which extracts hydrogen from other molecules and initiates a polymerization reaction via the extracted hydrogen, and the photoinitiator itself is not added to the polymerizable group. Accordingly, these are not suitable for the structural portion which is employed in side chain "a" of Polymer A according to the present invention. Further, even when a cleavage type photoinitiator is employed as the structural portion of the side chain, it is necessary to design the structure so that at cleavage of the side chain, a radical which exhibits addition reactivity to the polymerizable group is generated in the side chain itself of Polymer A.

In side chain "a" of Polymer A according to the present invention, listed as specific examples of the partial structure which generates radicals via exposure of active energy rays are acetophenone, benzylketal, and benzoin. Of these, in terms of reaction efficiency during active energy ray exposure, acetophenone and benzylketal are preferred. Further, in view of the degree of freedom of design in the case in which a polymer is incorporated as a side chain structure, acetophenone is still more preferred.

Yet further, in view of ease during synthesis and retardation for the formation of by-products, it is preferable that it is subjected to the partial structure of side chain "a" of Polymer A represented by following Formula (1).

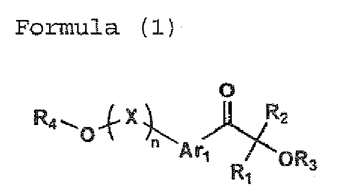

In above Formula (1), X represents a bivalent linking group; n represents 0 or 1; Ar₁ represents a substituted or unsubstituted alkyl group; R₁ and R₂ each represents a hydrogen atom or an alkyl group having 1 - 3 carbon atoms, which may combine to form a ring; and R₃ and R₄ each represents a hydrogen atom or a substituent.

Specific examples represented by X include alkylene groups such as a methylene group, an ethylene group, or a butylene group, alkylene oxides such as ethylene oxide, or propylene oxide, and polyalkylene oxide such as diethylene oxide or tripropylene oxide.

The partial structure of side chain "a" of Polymer A represented by Formula (1) is linked directly, or via a substituent, to the main chain of Polymer A. From the viewpoint of the synthesis, R₄ is preferably linked directly to the main chain of Polymer A.

An example of commercial photoinitiators which are appropriate as a raw material of the particle structure represented by Formula (1) includes IRGACURE 2959 (produced by Ciba Specialty Chemicals Co.).

Although the present invention is not limited to the followings, some examples of the partial structure represented by Formula (1) are shown below. The site indicated by "*" in each of the structures is the bonding site to the main chain of Polymer A.

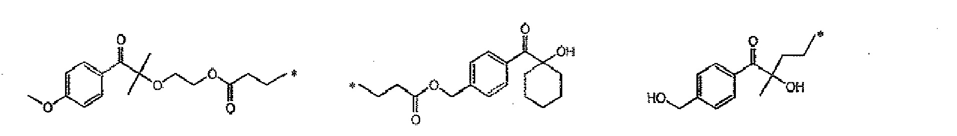

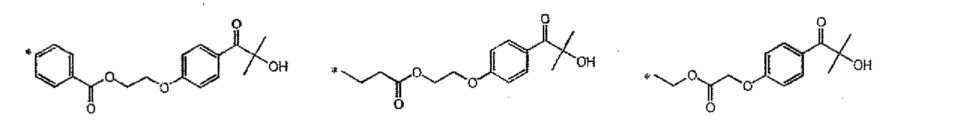

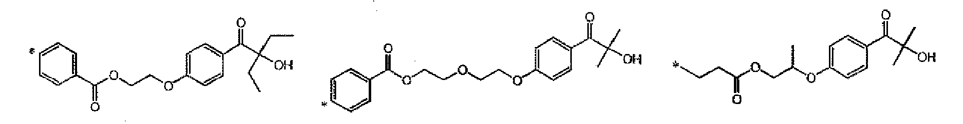

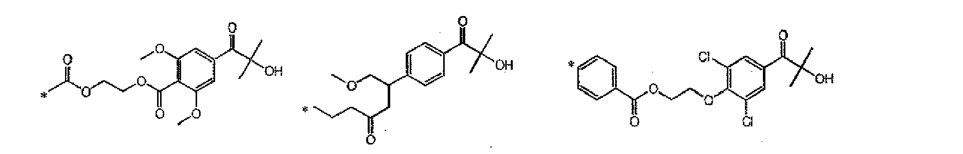

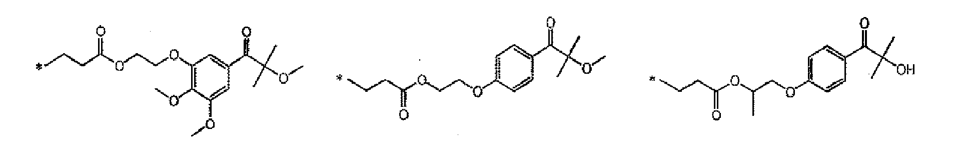

Main chains of Polymer A are not particularly limited and examples thereof include poly(meth)acrylate, polyurethane, polyester, polystyrene, saponified polyvinyl acetate, polyvinyl acetal, polyalkylene oxide, polyvinyl chloride, and polyvinylpyrrolidone, as well as copolymers thereof. Of these, in view of molecular design and ease of synthesis, poly(meth)acrylate and saponified polyvinyl acetate are preferred as the main chain of Polymer A. In view of ease of increase in a viscosity increasing gap prior to and after active energy ray exposure, saponified polyvinyl acetate is more preferred.

The molecular weight of Polymer A is preferably 5,000 - 60,000. By regulating the molecular weight to at least 5,000, viscosity increasing efficiency, when exposed to active energy rays, tends to be enhanced, while by regulating it to at most 60,000, ejection properties tend to be improved when applied to an ink-jet ink.

It is possible to employ, without almost limitation, as a side chain introduction method, conventional chemical reactions known in the art. However, when the main chain of Polymer A is the saponified polyvinyl acetate, in view of reaction yield and ease of synthesis it is preferable to utilize an acetalization reaction.

The conversion ratio of the side chain is preferably 0.5 - 10 mol%, and by realizing the above design, the reaction ratio during actives energy ray exposure tends to be enhanced.

Specific examples of Polymer A include photoinitiators which are prepared, as described in JP-A No. 7-33811, in such a manner that carboxylic acid-containing addition polymerization polymers, of an average molecular weight of at least 5,000, and hydroxyl group-containing phenyl ketone compounds undergo esterification reaction.

### (Polymer B)

Cross-linkable Polymer B according to the present invention has a plurality of side chains "b" having a polymerizable group. A polymerizable group which is a partial structure of side chain "b" includes a group having an ethylenic unsaturated bond, and specifically includes an acrylic group, a methacrylic group, a styryl group, a vinyl group, an allyl group, maleic anhydride, and maleimide. However, the examples are not limited thereto.

Main chains of Polymer B are not particularly limited. It is possible to employ, for example, poly(meth)acrylate, polyurethane, polyester, polystyrene, saponified polyvinyl acetate, polyvinyl acetal, polyalkylene oxide, polyvinyl chloride, polyvinylpyrrolidone, and copolymers thereof. Of these, in view of molecular design and ease of the synthesis, preferred as the main chains of Polymer B are poly(meth)acrylate and saponified polyvinyl acetate. In view of the high viscosity increasing rate during active energy ray exposure and efficient viscosity increase via relatively lower low energy radiation, more preferred is saponified polyvinyl acetate.

The molecular weight of Polymer B is preferably 5,000 - 60,000. By regulating the molecular weight to at least 5,000, the viscosity increasing ratio tends to be enhanced when exposed to active energy rays, while by regulating it to at most 60, 000, ejection properties tend to be improved when applied to an ink-jet ink.

Without particular limitation, it is possible to employ, as a side chain introducing method, conventional chemical reactions known in the art. In view of reaction yield and ease of synthesis, when the main chain of Polymer B is saponified polyvinyl acetate, it is preferable to utilize an acetalization reaction.

The conversion ratio of the side chain is preferably 0.5 - 10 mol%, but is more preferably 1 - 5 mol% in terms of reactivity. When the conversion ratio of the side chain is at least 0.5 mol%, sufficient crosslinking capability results, whereby the targeted objects of the present invention tend to be sufficiently realized. On the other hand, when it is at most 5 mol%, it is easy to prepare a flexible image film due to appropriate crosslinking density.

In the present invention, the main chain of Polymer B and the partial structure of the side chain are preferably those represented by following Formula (A) .

Formula (A) Poly-{(X₁)ₘ - [B - (Y₁)ₙ]ₚ}

In above Formula (A), "Poly" represents a main chain which is preferably poly(meth)acrylate, polyurethane, polyester, polystyrene, saponified polyvinyl acetate, polyvinyl acetal, polyalkylene oxide, polyvinyl chloride, vinylpyrrolidone, and copolymers thereof.

{ } represents a side chain, X₁ represents a (p + 1) valent linking group, and p represents a positive integer which is preferably an integer of 1 - 5. Specifically, when p = 1, X₁ represents a divalent linking group, and examples thereof include an alkylene group, an arylene group, a heteroarylene group, an ether group, a thioether group, an imino group, an ester group, an amido group, and a sulfonyl group. Further, these may combine to form one divalent group. Still further, when p = 2, a plurality of Y₁ and B described below may be the same or different.

Preferred examples of X₁ include alkylene oxide or at least divalent linking group which incorporates at least two aromatic groups.

B represents a polymerizable group, and specific examples thereof include groups having an ethylenic unsaturated bond, such as an acryl group, a methacryl group, a styryl group, a vinyl group, an allyl group, maleic anhydride, or maleimide. Of these, the acryl group and the methacryl group are preferred.

Y₁ represents a hydrogen atom or a substituent. Examples of the substituents include a halogen atom (for example, a fluorine atom and a chlorine atom), an alkyl group (for example, methyl, ethyl, butyl, pentyl, 2-methoxyethyl, trifluoromethyl, 2-ethylhexyl, cyclohexyl), an aryl group (for example, phenyl, p-tolyl, and naphthyl), an acyl group (for example, acetyl, propionyl, and benzoyl), an alkoxy group (for example, methoxy, ethoxy, and butoxy), an alkoxycarbonyl group (for example, methoxycarbonyl and i-propoxycarbonyl), an acetyloxy group (for example, acetyloxy and ethylcarbonyloxy), a carbamoyl group (for example, methylcarbamoyl, butylcarbamoyl, and phenylcarbamoyl), a sulfamoyl group(for example, sulfamoyl, methylsulfamoyl, dimethylsulfamoyl, and phenylsulfamoyl), an alkylthio group (for example, methylthio, ethylthio, and octylthio), an arylthio group (for example, phenylthio and p-tolylthio), an alkylureido group (for example, methylureido, ethylureido, methoxyethylureido, and dimethylureido), an arylureido group (for example, phenylureido), an alkylsulfonamido group (for example, methanesulfonamido, ethanesulfonamido, butanesulfonamido, trifluoromethylsulfonamido, and 2,2,2-trifluoroethylsulfonamido), an arylsulfonamido group (for example, phenylsulfonamido and tolylsulfonamido), an alkylaminosulfonylamino group (for example, methylaminosulfonylamino and ethylaminosulfonylamino), an arylaminosulfonylamino group (for example, phenylaminosulfonylamino), a hydroxyl group, a heterocyclyl group (for example, pyridyl, pyrazolyl, imidazolyl, furyl, and thienyl). Further, these groups may have a substituent.

"m" represents 0 or 1, while "n" also represents 0 or 1.

Specific examples of Polymer B include polymers described in JP-A Nos. 2000-181062 and 2004-1898541, in which a (meth)acryl group is introduced into the side chain of saponified polyvinyl acetate, and those described in JP-A Nos. 2002-341530 and 2005-213350 in which a (meth)acryl group is introduced into the side chain of poly(meth)acrylate having a carboxyl group.

### (Combination of Polymers)

In the present invention, combinations of Polymers A and B are not particularly limited. In view of ease of increasing the viscosity increasing gap prior to and after active energy ray exposure and excellent viscosity increasing efficiency during active energy ray exposure, a combination is preferred in which both polymers, which have polyvinyl acetate as a main chain, are employed.

The total content of Polymers A and B is preferably 0.5 - 5% by weight with respect to the total of the ink-jet ink. By regulating the above content to at least 0.5% by weight, the viscosity increasing efficiency during active energy ray exposure tends to be enhanced, while by regulating it to at most 5% by weight, in an ambience where ink tends to dry, maintenance properties and intermittent ejection properties tend to be improved.

The content ratio of Polymer A to Polymer B is preferably 1 : at least 0.1 - 1 : at most 10. By regulating the above ratio to 1 : at least 0.1, the reaching viscosity during active energy ray exposure tends to be higher, while by regulating it to 1 : at most 10, the viscosity increasing rate during active energy ray exposure tends to be higher, whereby an ink is readily prepared which exhibits an efficient viscosity increase even via relatively small exposure energy.

### (Photoinitiators and Sensitizers)

In the present invention, in addition to Polymer A, conventional photoinitiators and sensitizers, known in the art, may be added. These compounds may be added to an ink via dissolving them in solvents or dispersing them in the same. Employed photoinitiators and sensitizers are not particularly limited. When they are employed to prepare an aqueous ink-jet ink, in view of blending properties and reaction efficiency, water-soluble photoinitiators and sensitizers are preferred. In view of blending properties to aqueous solvents, preferred, for example, are 4-(2-hydroxyethoxy)phenyl-(hydroxyl-2-propyl)ketone (HMPK), thioxanthone ammonium salt (QTX), benzophenone ammonium salt (ABQ).

Specific examples of other usable photoinitiators and sensitizers include benzophenones such as benzophenone, hydroxybenzophenone, bis-N,N- diethylaminobenzophenone, or 4-methoxy-4'-dimethylaminobenzophenone; thioxanthones such as thioxanthone, 2,4-diethylthioxanthone, isopropylthioxanthone, chlorothioxanthone, or isopropoxychlorothioxanthone; anthraquinones such as ethylanthraquinone, benzanthraquinone, aminoanthraquinone, or chloroanthraquinone; benzoin ethers such as benzoin methyl ether, 2,4,6-trihalomethyltriazine; and benzoins such as methylbenzoin or ethylbenzoin; acridine derivatives such as 1,7-bis(9,9'-acrydynyl)heptane; as well as 1-hydroxycyclohexyl phenyl ketone, a 2-(o-chlorophenyl)-4,5-diphenylimidazole dimer, a 2-(o-chlorophenyl)-4,5-di(m-methoxyphenyl) imidazole dimer, a 2-(o-fluorophenyl)-4,5-phenylimidazole dimer, a 2-(o-methoxyphenyl)-,5-phenylimidazole dimer, a 2-(p-methoxyphenyl)-4,5-diphenylimidazole dimer, a 2-di(p-methoxyphenyl)-5-phenylimidazole dimer, a 2-(2,4-dimethoxyphenyl)-4,5-diphenylimidazole dimer, a 2,4,5-triarylimidazole dimer, benzylmethylketal, 2-benzyl-2-dimethylamino-1-(4 morpholinophenyl)butane-1-one, 2-methyl-1-[4-(methylthio)phenyl]-2-morpholino-1-propane, 2-hydroxy-2-methyl-1-phenyl-propane-1-one, 1-[4-(2-hydroxyethoxy)-phenyl]-2-hydroxy-2-methyl-1-propane-1-one, phenanthrenequinone, 9,10-phenanthrenenequinone, and bisacylphosphine oxide.

### (Other Constituting Components of Ink-Jet Ink)

### (Solvents)

It is preferable that the ink-jet ink of the present invention incorporates volatile solvents. By preparing an ink incorporating volatile solvents, the thickness of image film, which is formed via volatilization of the solvents, is decreased, whereby it is possible to produce images with excellent uniformity and glossiness. Volatile solvents, which are appropriate for the present invention, include water as well as organic solvents at a boiling point of at most 180°C. In view of ease of handling and safety of ink-jet inks, it is preferable to prepare an ink which incorporates water as a volatile solvent. The content of water is preferably 40 - 80% by weight.

Examples of other solvents which are applicable to the present invention include alcohols (for example, methanol, ethanol, propanol, isopropanol, butanol, isobutanol, secondary butanol, tertiary butanol, pentanol, hexanoyl, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); polyhydric alcohol ethers (for example, ethylene glycol monomethyl ether, ethylene glycol monoethyl ether, ethylene glycol monobutyl ether, ethylene glycol dimethyl ether, diethylene glycol monomethyl ether, diethylene glycol monomethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether); amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine); amides (For example, formamide, N,N-dimethylformamide, and N,N-dzmethylacetamide); heterocyclic ring compounds (for example, 2-pyrrolidinone, N-methyl-2-pyrrolidone, cyclohexylpyrrolidone, 2-oxazolidone, ethylene carbonate, propylene carbonate, 1,3-dimethyl-2-imidazolidinone, and sulfolane); and sulfoxides (for example, dimethylsufoxide).

### (Monomers)

To enhance photographic speed and physical properties of cured materials, it is possible to simultaneously employ, in the ink-jet ink of the present invention, conventional polymerizable monomers known in the art. Examples thereof include polyethylene glycol diacrylate, polyethylene glycol dimethacrylate, trimethylolpropane diacrylate, trimethylolpropane dimethacrylate, trimethylolpropane triacrylate, trimethylolpropane trimethacrylate, trimethylolpropane ethoxyacrylate, trimethylolpropane ethoxymethacrylate, trimethylolpropane propoxytriacrylate, trimethylolpropane propoxytriacrylate, tetramethylolmethane trimethacrylate, tetramethylolmethane tetraacrylate, tetramethylolmethane tetramethacrylate, polypropylene glycol diacrylate, polypropylene glycol dimethacrylate, dipentaerythritol pentaacrylate, dipentaerythritol pentamethacrylate, dipentaerythritol hexaacrylate, dipentaerythritol hexamethacrylate, bisphenol A polyoxyethylene diacrylate, bisphenol A polyoxyethylene dimethacrylate, bisphenol A dioxyethylene diacrylate, bisphenol A dioxyethylene dimethacrylate, bisphenol A trioxyethylene acrylate, bisphenol A trioxyethylene dimethacrylate, bisphenol A decaoxyethylene diacrylate, bisphenol A decaoxyethylene dimethacrylate, esters of a polyhydric carboxylic acid (phthalic anhydride) with a compound (β-hydroxyacrylate or β-hydroxyethyl methacrylate) having a hydroxyl group and an ethylenic unsaturated group, acrylic acid or methacrylic acid alkyl esters (methyl acrylate, methyl methacrylate, ethyl acrylate, ethyl methacrylate, butyl acrylate, butyl methacrylate, 2-ethylhexyl acrylate, and 2-ethyl methacrylate).

### (Colorants)

It is possible to employ, as colorants employed in the ink-jet ink of the present invention, dyes or pigments.

Dyes usable in the present invention are not particularly limited and include water-soluble dyes such as an acid dye, a direct dye, or a reactive dye as well as disperse dyes.

Specific examples of dyes applicable to the ink-jet ink of the present invention will now be listed, however the present invention is not limited thereto.

Examples of usable water-soluble dyes in the present invention include azo dyes, methine dyes, azomethine dyes, xanthene dyes, quinone dyes, phthalocyanine dyes, triphenylmethane dyes, and diphenylmethane dyes.

Listed examples of water-soluble dyes used for the present invention are as follows.
<C.I. Acid yellow>
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246,
<C.I. Acid orange>
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168,
<C.I. Acid red>
   88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
<C.I. Acid violet>
   17, 19, 21, 42, 43, 47, 48, 49, 54, 66, 78, 90, 97, 102, 109, 126,
<C.I. Acid blue>
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350,
<C.I. Acid green>
   9, 12, 16, 19, 20, 25, 27, 28, 40, 43, 56, 73, 81, 84, 104, 108, 109,
<C.I. Acid brown>
   2, 4, 13, 14, 19, 28, 44, 123, 224, 226, 227, 248, 282, 283, 289, 294, 297, 298, 301, 355, 357, 413,
<C.I. Acid black>
   1, 2, 3, 24, 26, 31, 50, 52, 58, 60, 63, 107, 109, 112, 119, 132, 140, 155, 172, 187, 188, 194, 207, 222,
<C.I. Direct yellow>
   8, 9, 10, 11, 12, 22, 27, 28, 39, 44, 50, 58, 79, 86, 87, 98, 105, 106, 130, 132, 137, 142, 147, 153,
<C.I. Direct orange>
   6, 26, 27, 34, 39, 40, 46, 102, 105, 107, 118,
<C.I. Direct red>
   2, 4, 9, 23, 24, 31, 54, 62, 69, 79, 80, 81, 83, 84, 89, 95, 212, 224, 225, 226, 227, 239, 242, 243, 254,
<C.I. Direct violet>
   9, 35, 51, 66, 94, 95,
<C.I. Direct blue>
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,
<C.I. Direct green>
   26, 28, 59, 80, 85,
<C.I. Direct brown>
   44, 106, 115, 195, 209, 210, 222, 223,
<C.I. Direct black>
   17, 19, 22, 32, 51, 62, 108, 112, 113, 117, 118, 132, 146, 154, 159, 169,
<C.I. Reactive yellow>
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,
<C.I. Reactive orange>
   1, 4, 5, 7, 11, 12, 13, 15, 16, 20, 30, 35, 56, 64, 67, 69, 70, 72, 74, 82, 84, 86, 87, 91, 92, 93, 95, 107,
<C.I. Reactive red>
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235,
<C.I. Reactive violet>
   1, 2, 4, 5, 6, 22, 23, 33, 36, 38,
<C.I. Reactive blue>
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
<C.I. Reactive green>
   8, 12, 15, 19, 21,
<C.I. Reactive brown>
   2, 7, 9, 10, 11, 17, 18, 19, 21, 23, 31, 37, 43, 46,
<C.I. Reactive black>
   5, 8, 13, 14, 31, 34, 39
<C.I. Food black>
   1, 2.

Further, dyes include the compounds represented by following Formulas (11) or (12).

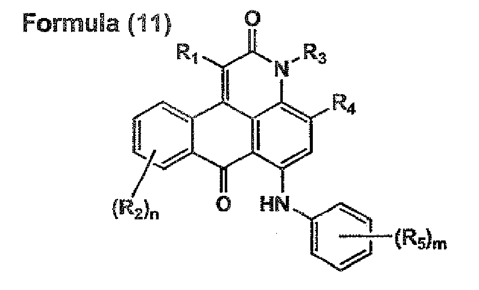

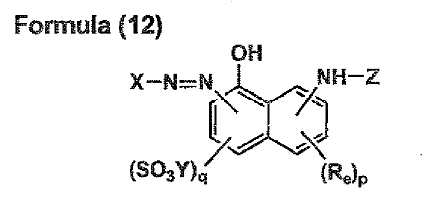

In above Formula (11), R₁ represents a hydrogen atom or a substitutable substituent, and a hydrogen atom or a phenyl carbonyl group is preferred. Each R₂ may be different and represents a hydrogen atom or a substitutable substituent and a hydrogen is preferred. R₃ represents a hydrogen atom or a substitutable substituent, and a hydrogen atom or an alkyl group is preferred. R₄ represents a hydrogen atom or a substitutable substituent and a hydrogen atom or an aryloxy group is preferred. Each R₅ may be different and represents a hydrogen atom or a substitutable substituent, while a sulfonic acid group is preferred. "n" represents an integer of 1 - 4, while "m" represents an integer of 1 - 5.

In above Formula (12), X represents a phenyl group or a naphthyl group, which may be substituted with a substitutable substituent, and it is preferable that X is substituted with a sulfonic acid group or a carboxyl group. Y represents a hydrogen ion, a sodium ion, a potassium ion, a lithium ion, an ammonium ion, or an alkyl ammonium ion. Each R₆ may be different and represents a hydrogen atom or a substituent which is substitutable to a naphthalene ring. "q" represents 1 or 2, while "p" represents an integer of 1 - 4, however, p + q = 5. Z represents a substitutable group, a carbonyl group or a sulfonyl group, or the group represented by following Formula (13), and the groups represented by following Formula (13) are particularly preferred.

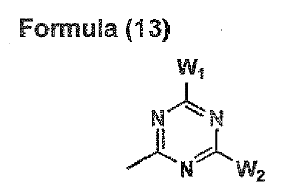

In above Formula (13), W₁ and W₂ each independently represent a halogen atom, an amino group, a hydroxyl group, an alkylamino group, or an arylamino group, and of these, the halogen atom, the hydroxyl group, or an alkyl amino group is preferred.

Other than those, listed may be various disperse dyes such as azo based disperse dyes, quinone based disperse dyes, anthraquinone based disperse dyes, or quinophtharone based disperse dyes, as well as chelate dyes and azo dyes employed in silver dye bleach method photosensitive materials (for example, CIBACHROME produced by Ciba Geigy).

The chelate dyes are described, for example, in British Patent No. 1,077,484, while the azo dyes for the silver dye bleach method photosensitive materials are descried, for example, in British Patent Nos. 1,039,458, 1,004,957, 1,077,628, and U.S. Patent No. 2,612,448.

It is possible to list, as usable pigments in the present invention, conventional organic or inorganic pigments known in the art. Examples thereof include organic pigments such as azo pigments including azolake pigments, insoluble azo pigments, condensed azo pigments, and chelate azo pigments, polycyclic pigments including phthalocyanine pigments, perylene and perylene pigments, anthraquinone pigments, quinacridone pigments, dioxanzine pigments, thioindigo pigments, isoindolinone pigments, quinophtharony pigments, dye lakes such as basic dye type lakes or acidic dye type lakes, nitro pigments, nitroso pigments, aniline black, and daylight fluorescent pigments, as well as inorganic pigments such as carbon black.

Specific examples of usable pigments in the ink-jet ink of the present invention will now be listed, however they are not limited only to exemplified pigments.

Examples of the pigments for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48 : 1, C.I. Pigment Red 53 : 1, C.I. Pigment Red 57 : 1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, and C.I. Pigment Red 222.

Examples of the pigments for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 150, and C.I. Pigment Yellow 180.

Examples of the pigments for green or cyan include C.I. Pigment Blue 15, C.I. Pigment Blue 15 : 2, C.I. Pigment Blue 15 : 3, C.I. Pigment Blue 15 : 4, C.I. Pigment Blue 16, C.I. Pigment Blue 60, and C.I. Pigment Green 7.

Further, examples of pigments for black include carbon black.

### (Self-Dispersed Pigments)

Further, in the ink-jet ink of the present invention, it is possible to employ, as a pigment, self-dispersed pigments. "Self-dispersed pigments", as described herein, refer to those which are dispersible without disperse agents. Pigment particles having a polar group on the surface are particularly preferred.

"Pigment particles having a polar group on the surface", as described herein, refer to those in which the surface of the pigments particles is directly modified by a polar group or those (hereinafter referred to as pigment derivatives) in which in organic compounds having an organic pigment mother nucleus a polar group, a polar group is bonded directly or via a joint.

Examples of the polar group include a sulfonic acid group, a carboxylic acid group, a phosphoric acid group, a boric acid group, and a hydroxyl group. Of these, the sulfonic acid group and the carboxylic acid group are preferred in which the sulfonic acid group is more preferred.

Methods to prepare pigment particles having a polar group on the surface include those described, for example, in WO No. 97/48769, as well as JP-A Nos. 11-246807, 11-57458, 11-189739, 11-323232, and 2000-265094, in which by oxidizing the surface of pigment particles with oxidizing agents, a polar group such as a sulfonic acid group or a salt thereof is introduced into at least one part on the surface of pigment particles. In practice, preparation is carried out by oxidizing carbon black with concentrated nitric acid or in the case of color pigments, by oxidizing them in sulfolane or N-methyl-2-pyrrolidone, with sulfamic acid, sulfonated pyridine salts, or amidosulfuric acid. During these reactions, reaction products, which become water-insoluble due to excessive oxidation, are removed followed by purification, whereby it is possible to prepare a pigment dispersion. Further, when a sulfonic acid group is introduced onto the surface via oxidation, if necessary, the acid group may be neutralized by basic compounds.

Other methods include the method described in JP-A Nos-11-49974, 2000-273383, and 2000-303014, in which pigment derivatives are adsorbed onto the surface of pigment particles via a process such as milling, and the method described in JP-A Nos. 2002-179977 and 2002-201401, in which after dissolving pigments together with pigment derivatives, crystallization is conducted in poor solvents. It is possible to readily prepare pigment particles having a polar group on the surface, employing any of the above methods.

The polar group may be free or in a form of a salt, or may have a counter salt. Examples of the counter salts include inorganic salts (for example, lithium, sodium, potassium, magnesium, calcium, aluminum, nickel, and ammonium) and organic salts (for example, triethylammonium, diethylammonium, pyridium, triethanol ammonium). Of these, counter salts exhibiting univalence are preferred.

### (Production Method of Pigment Dispersion)

It is possible to employ, as a pigment dispersing method, various types of homogenizers such as a ball mill, a sand mill, an attritor, a roller mill, an agitator, a Henschel mixer, a colloidal mill, an ultrasonic homogenizer, a pearl mill, a wet system jet mill, or a paint shaker. Further to remove a coarse particle portion of the pigment dispersion, it is preferable to employ a centrifugal separator and filters.

### (Surface Active Agents Applicable to Pigment Dispersion)

During preparation of pigment dispersion, if desired, surface active agents and polymer dispersing agents may be incorporated. Types of surface active agents and polymer dispersing agents are not particularly limited. Examples of the surface active agents include those such as higher fatty acid salts, alkyl sulfates, alkylester sulfates, alkyl sulfonates, sulfosuccinate, naphthalene sulfates, alkyl phosphates, polyoxyalkylene alkyl ether phosphates, polyoxyalkylene alkyl phenyl ether, polyoxyethylene polyoxypropylene glycol, glycerin ester, sorbitan ester, polyoxyethylene fatty acid amide, or amine oxide. Further, in view of discharge stability, it is preferable to employ, as the polymer dispersing agent, water-soluble resins. Examples thereof include block copolymers or random polymers of at least two types of monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, fumaric acid derivatives, as well as salts thereof. More specifically, listed may be styrene-acrylic acid-alkyl acrylate copolymers, styrene-acrylic acid copolymers, styrene-maleic acid-alkyl acrylate copolymers, styrene-malic acid copolymers, styrene-methacrylic acid-alkyl acrylate copolymers, styrene-methacrylic acid copolymers, styrene-maleic acid half-ester copolymers, vinylnaphthalene-acrylic acid copolymers, and vinylnaphthalene-maleic acid copolymers. The added amount of each of the above polymer dispersing agents is 0.1 - 10% by weight with respect to the total ink, but is more preferably 0.3 - 5% by weight. These polymer dispersing agents may be employed in combinations of at least two types.

### (Diameter of Pigment Particles)

The diameter of pigment particles includes a particle diameter (a primary particle diameter) which is determined by direct observation of particles employing a microscope, a dispersed particle diameter (a secondary particle diameter) which is determined employing a particle size meter employing light scattering, and a viscosity conversion particle diameter determined based on the intrinsic viscosity.

In view of lightfastness and dispersion stability, the primary particle diameter of pigments in the ink of the present invention is preferably 10 - 100 nm, but is more preferably 10 - 70 nm. When the primary diameter is at least 10 nm, lightfastness of images tends to be improved, while when it is at most 100 nm, clogging of heads tends to be minimized. The above primary particle diameter is determined in such a manner that each major axis of 1,000 pigment particles is determined employing a transmission type electron microscope and the average (the number average) is calculated.

### (Ink-Jet Ink Set)

In the present invention, it is preferable to employ an ink-jet ink set which is composed of at least two types of ink-jet inks in which at least one of the above ink-jet inks is the ink-jet ink of the present invention.

In the present invention, an ink-jet ink set incorporates the ink-jet ink of the present invention. It is preferable that at least two inks are the ink-jet inks of the present invention, and it is most preferable that all inks are ink-jet inks of the present invention, whereby the effects of the present invention are markedly realized.

It is preferable to employ, as hue differing inks which constitute the ink-jet ink set, an ink set composed of yellow, magenta, cyan and black ink-jet inks.

Further, in addition to the above 4 color inks, employed may be a pale cyan ink, a pale magenta ink, a dark yellow ink, a pale black ink (a grey ink). Still further, it is possible to employ so-called special color inks such as blue, red, green, orange, or violet.

### (Contrasting Inks)

In the ink-jet ink set, it is preferable to employ the ink-jet ink set composed of at least two same color inks differ in concentration in at least one color ink. Further, in at least two color inks, it is more preferable to employ the ink-jet ink set composed of at least two same color inks which differ in concentration. Specifically, in at least three color inks, it is preferable to employ the ink-jet ink set composed of at least two same color inks which differ in concentration.

The above reason is that by employing an ink at a lower concentration, feel of grains is reduced whereby it is possible to form high quality images without so-called "granular appearance". Specifically, it is preferable to employ at least two inks in cyan ink or magenta ink which results in high human visibility.

Any of the appropriate concentration ratio in the ink-jet ink set, which differs in concentration, may be employed. However, in order to realize smooth tone reproduction, the ratio of the high concentration ink to the low concentration ink (the concentration of colorants in the low concentration ink/the concentration of colorants in the high concentration ink) is preferably 0.1 - 1.0, is more preferably 0.2 - 0.5, but is most preferably 0.25 - 0.4.

### (White Ink)

In the ink-jet ink set, in addition to the above colored pigments, employed may be a white ink incorporating white pigments. Those may be usable as a white pigment as long as they look an ink-jet ink in white, and examples thereof include inorganic white pigments and organic white pigments as well as white minute hollow polymer particles.

Examples of inorganic white pigments include alkaline earth metal sulfates such as barium sulfate, alkaline earth metal carbonates such as calcium carbonate, minute silicic acid powder, silica such as synthetic silicic acid, calcium silicate, alumina, alumina hydrate, titanium oxide, zinc oxide, talc, and clay. Specifically, titanium oxide is preferably employed since it exhibits high refractive index to result in high shielding capability and coloring capability in the form of minute particles.

Organic white pigments include salts of organic compounds, described in JP-A No. 11-129613 and alkylenebismelamine derivatives, described in JP-A Nos. 11-140365, 2001-234093. Specific commercial products of the above white pigments include SHIGENOX OWP, SHIGENOX OWPL, SHIGENOX FWP, SHIGENOX FWG, SHIGENOX UL, and SHIGENOX U (all trade names, produced by Hakkol Chemical Co.).

White minute hollow polymer particles include minute particles exhibiting thermal plasticity, disclosed in U.S. Patent No. 4,089,800, which are substantially prepared employing organic polymers.

In the present invention, white pigments may be employed individually or in combination. To disperse pigments, employed may be a ball mill, a sand mill, an attritor, a roller mill, an agitator, a Henschel mixer, a colloidal mill, an ultrasonic homogenizer, a pearl mill, a wet system jet mill, and a paint shaker. Further, when pigments are dispersed, it is possible to employ dispersing agents.

In regard with dispersing agents, it is possible to employ common dispersing agents, but it is preferable to employ polymer dispersing agents.

Pigments are dispersed so that the resulting average particle diameter reaches preferably 0.05 - 1.0 µm, but reaches more preferably 0.08 - 0.3 µm.

### (Colorless Ink)

In the ink-jet ink set, it is possible to simultaneously employ a colorless ink (also referred to as a transparent ink) which contains substantially no colorant.

"Ink which contains substantially no colorant", as described in the present invention refers to the ink in which the content of colorants is at most 0.1% with respect to the total ink weight, but preferably, no colorant is incorporated.

Components incorporated in the colorless ink according to the present invention include coagulating agents such as a salt, an acid compound, and an alkali compound, functional materials such as a photopolymerization initiator or a lightfastness improving agent, and polymers.

It my be employed other polymers than Polymer A and Polymer B as a component to enhance feeling quality and durability of images. When the polymers are employed in the ink-jet ink of the present invention, they may be homogeneously dissolved or may be present in a heterogeneously dispersed system.

Examples of homogeneously dissolved polymers for an aqueous ink-jet ink are, for example, polyvinyl alcohol, polyethylene oxide, polyvinylpyrrolidone, polyacrylic acid, polyacryl amide, polyurethane, dextran, dextrin, carrageenan (κ, 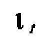 and λ), agar-agar, PULLULAN, water-soluble polyvinyl butyral, hydroxyethyl cellulose, carboxymethyl cellulose.

With regard to the dispersed state resins in an aqueous system, it is specifically preferable to incorporate minute thermoplastic resin particles since the glossiness of images is enhanced. With regard to the minute thermally plastic resin particles, it is possible to utilize thermally plastic resins capable of being incorporated into the surface layer of the above recording medium or the types described in minute particles thereof. Specifically, it is preferable to employ those which result in neither viscosity increase nor precipitation when added to the ink. The average diameter of the minute thermoplastic resin particles is preferably at most 0.5 µm. It is preferable that added minute thermoplastic resin particles is melted or soften in the range of 0 - 150 °C.

### (Other additives of Ink-Jet Ink)

In order to enhance discharge stability, adaptability to printing heads or ink cartridges, storage stability, image retaining properties, and other various performance, if desired, it is possible to employ, in the ink of the present invention, various appropriately selected additives, known in the art, such as viscosity controlling agents, surface tension controlling agents, specific resistance controlling agents, film forming agents, dispersing agents, surface active agents, UV absorbing agents, antioxidants, anti-fading agents, fungicides, or anticorrosive agents. Examples thereof include polystyrene, polyacrylic acid esters, polymethacrylic acid esters, polyacrylamides, polyethylene, polypropylene, polyvinyl chloride, polyvinylidene chloride, and copolymers thereof, organic latexes of urea resins or melamine resins, fluid paraffin, dioctyl phthalate, tricresyl phosphate, minute oil drop particles such as silicone oil, various anionic and cationic surface active agents, ultraviolet ray absorbing agents described in JP-A Nos. 57-74193, 57-87988and 62-291476, antifading agents described in JP-A Nos. 57-74192, 57-87989, 60-72785, 61-146591, 1-95091, and 3-13376, optical brightening agents described in JP-A Nos. 59-42993, 59-52689, 62-280069, 61-242871, and 4-219266, and pH controlling agents such as sulfuric acid, phosphoric acid, citric acid, sodium hydroxide, potassium hydroxide, or potassium carbonate.

### (Latexes)

In the ink-jet ink of the present invention, latexes may be added to the ink. Examples thereof include latexes of styrene-butadiene copolymers, polystyrene, acrylonitrile-butadiene copolymers, acrylic acid ester copolymers, polyurethane, silicone-acryl copolymers, and acryl-modified fluororesins. The latexes may be those which are prepared by dispersing polymer particles employing emulsifiers or by dispersing the same without employing emulsifiers. Surface active agents are frequently employed as an emulsifier. It is preferable to employ, as the emulsifier, polymers having a water-soluble group such as a sulfonic acid group or a carboxylic acid group (for example, polymers in which a solubilizing group is subjected to a graft bond and polymers which are prepared employing monomers having a solubilizing group and monomers having an insoluble portion.).

Further, in the ink-jet ink of the present invention, it is specifically preferred to employ soap-free latexes. "Soap-free latexes", as described herein, refer to latexes in which emulsifiers are not employed and latexes in which polymers having a water solubilizing group such as a sulfonic group or a carboxylic group (for example, polymers in which the solubilizing group is subjected to graft bond, or polymers prepared employing monomers having a solubilizing group and an insoluble portion) are employed as the emulsifier.

In recent years, other than latexes in which all the particles, which are uniformly structured, are dispersed, latex exists in which core/shell type polymer particles, in which the composition of the central portion and the peripheral portion of the particle differs, are dispersed. It is possible to preferably employ this type of latex.

In the ink-jet ink of the present invention, the average diameter of polymer particles in latex is preferably 10 - 300 nm, but is more preferably 10 - 100 nm. When the average diameter of polymer particles in latex is at most 300 nm, glossiness of images tends to be improved, while when it is at least 10 nm, water resistance and abrasion resistance tend to be enhanced. It is possible to determine the average diameter of polymer particles in latex via a commercial particle size meter employing a light scattering method, an electrophoretic method, or a laser Doppler method.

In the ink-jet ink of the present invention, the added amount of solids in latex is preferably 0.1 - 20% by weight with respect to the total weight of the ink, but is more preferably 0.5 - 10% by weight. By regulating the added amount of solids in latex to at least 0.1% by weight, sufficient effects tend to be realized with regard to weather resistance, while by regulating it to at most 20% by weight, problems of storage stability of ink tend to be minimized.

### (Thermal Ejection Stabilizers)

The ink-jet ink of the present invention may be employed in thermal type ink-jet printers. In such a case, in order to overcome head clogging called "cogation", incorporated may be salts selected from the group consisting of (M₁)₂SO₄, CH₃COO(M₁), Ph-COO(M₁), (M₁)NO₃, (M₁)Cl, (M₁)Br, (M₁)I, (M₁)₂SO₃, and (M₁)CO₃, wherein M₁ represents an alkali metal, ammonium, or organic ammonium, and Ph represents a phenyl group. Examples of the above alkali metal include Li, Na, K, Rb, and Cs. Examples of the above organic ammonium include methylammonium, dimethyl ammonium, trimethyl ammonium, ethylammonium, diethyl ammonium, trimethyl ammonium, trihydroxymethylamine, dihydroxymethylamine, monohydroxymethylamine, monoethanol ammonium, dimethanol ammonium, triethanol ammonium, N-methylmonoethanol ammonium, N-methyldiethanol ammonium, monopropanol ammonium, dipropanol ammonium, and tripropanol ammonium.

### (Crosslinking Agents)

Crosslinking agents may be incorporated in the ink-jet ink of the present invention. Specific examples of crosslinking agents include epoxy based curing agents (diglycidyl ethyl ether, ethylene glycol diglycidyl, 1,4-butanediol diglycidyl ether, 1,6- diglycidylcyclohexane, N,N-diglycidyl-4-glycidyloxyaniline, sorbitol polyglycidyl ether, and glycerol polyglycidyl ether), aldehyde based curing agents (formaldehyde and glyoxal), active halogen based curing agents (2,4-dichloro-4-hydroxy-1,3,5-s-triazine), active vinyl based compounds, (1,3,5-trisacryloyl-hexahydros-triazine and bisvinylsulfonyl methyl ether), aluminum alum, boric acid or salts thereof.

### (Antifading Agents)

It is possible to employ, in the ink-jet ink of the present invention, prior art antifading agents employed in conventional ink-jet inks. The above antifading agents retard fading due to light exposure as well as due to oxidizing gases such as ozone, active oxygen, NOₓ, or SOₓ. It is possible to list, as such antifading agents, for example, the antioxidants described in JP-A Nos. 57-74192, 57-87989, and 60-72785, the UV absorbers described in JP-A No. 57-74192, the hydrazides described in JP-A No.61-154989, the hindered amine based antioxidants described in JP-A No. 61-146591, the nitrogen containing heterocyclyl mercapto based compounds described in JP-A No. 61-177276, the thioether based antioxidants described in JP-A Nos. 1-115677 and 1-36479, the specifically structured hindered phenol based antioxidants described in JP-A No. 1-36480, the ascorbic acids described in JP-A Nos. 7-195824 and 8-150773, the zinc sulfates described in JP-A No. 7-149037, the thiocyanates described in JP-A No. 7-314882, the urea derivatives described in JP-A No. 7-314883, the saccharide described in JP-A Nos. 7-276790 and 8-108617, the phosphoric acid based antioxidants described in JP-A No. 8-118791, the nitrites, sulfites, and thiosulfates described in JP-A No. 8-300807, and the hydroxylamine derivatives described in 9-267544. Further, a polycondensation product of dicyandiamide and polyalkylenepolyamine is one of the effective antifading agents in ink-jet printing.

### (pH Buffering Agents)

In the ink-jet ink of the present invention, pH buffering agents may be incorporated in the ink. Examples thereof include organic and inorganic acids. As the organic acids, listed may be, for example, various types of organic acid such as non-volatile phthalic acid, terephthalic acid, salicylic acid, benzoic acid, sebacic acid, lauric acid, palmitic acid, ascorbic acid, citric acid, malic acid, lactic acid, succinic acid, oxalic acid, polyacrylic acid, and benzilic acid.

### (Antifoaming Agents)

It is possible to incorporate antifoaming agents into the ink-jet ink of the present invention. Antifoaming agents are not particularly limited and commercial products are available. Examples thereof include KF96, 66, 69, KS68, 604, 607A, 603, KM73, 73A, 73E, 72, 723A, 72C, 72F, 82F, 70, 71, 75, 80, 83A, 85, 89, 90, 68-1F, and 68-2F (all trade names). The blended amount of these compounds is not particularly limited, but the blended amount in the ink of the present invention is preferably 0.001 - 2% by weight. When the blended amount of the above compounds is less than 0.001% by weight, foams tend to be generated during ink preparation and it is difficult to remove tiny bubbles in the ink. On the other hand, when it exceeds 2% by weight, foam generation is retarded, but during printing, ink repellency occasionally occurs, resulting in degradation of printing quality. Accordingly, it is preferable that the above range is realized.

### (Surface Active Agents)

Surface active agents which are preferably employed in the present invention include anionic surface active agents such as alkyl sulfates, alkyl ester sulfates, dialkyl sulfosuccinates, alkylnaphthalene sulfonates, alkyl phosphates, polyoxyalkylene alkyl ether sulfates, or fatty acid salts; nonionic surface active agents such as polyoxyethylene alkyl ethers, polyoxyethylene-polyoxypropylene block copolymers; and cationic surface active agents such as glycerin esters, sorbitan esters, polyoxyethylene fatty acid amide, surface active agents including amine oxides, alkylamine salts, or quaternary ammonium salts.

### (Preparation of Inks)

Preparation of the ink-jet ink of the present invention is not particularly limited. When an ink incorporating dispersed materials such as pigments, disperse dyes, or minute inorganic particles, it is preferable to prepare the ink so that neither coagulation nor precipitation occurs during the preparation process. If necessary, it is possible to accept a preparation method in which the addition order and addition rate of dispersions, solvents, photosensitive resins and other additives are controlled. Further, during preparation, or after preparation, to stabilize dispersion, or to re-disperse coagulants formed during the preparation, a dispersion treatment and a heating treatment may be carried out employing a bead mill or ultrasonic waves.

### (Physical Properties of Ink)

### (Viscosity)

Viscosity of the ink-jet ink of the present invention is not particularly limited, and is preferably 2 15 mPa·s at 25 °C. Further, it is preferable that the viscosity of the ink-jet ink of the present invention exhibits no share rate dependence.

"Ink viscosity" (measured in mPa·s), as described in the present invention, is not particularly limited as long as it is determined via the viscometer calibration standard solutions specified in JIS Z 8809 and refers to the viscosity value determined at 25 °C based on the method known in the art. Usable viscometers include rotary system, vibration system, and capillary system viscometers. Examples include the conical flat plate type E type viscometer produced by TOKIMEC Inc., E Type Viscometer (a rotary viscometer) produced by Toki Sangyo Co., Ltd., B type viscometer BL produced by Tokyo Keiki Co., Ltd., FVM-80A produced by Yamaichi Electronics Co., Ltd., VISCOLINER produced by Nametore Industries Co., VISO MATE MODEL VM-1A and DD-1 produced by Yamaichi Electronics Co., Ltd.

### (Surface Tension)

Further, the surface tension of the ink of the present invention is preferably at most 35 mN/mm, but is more preferably 20 - 35 mN/mm.

"Surface tension" (mN/mm), as described in the present invention, refers to the surface tension value determined at 25 °C. Its determination methods are described in reference books of surface chemistry and colloid chemistry. Reference is made, for example, to pages 68 - 117 of Shin-Jikken Kagaku Koza (Lecture of New Experimental Chemistry), Volume 18 (Surface Colloid), edited by Nihon Kagaku Kai, published by Maruzen, Ltd. Specifically, it is possible to determine surface tension employing the ring method (the DuNouy method), and the platinum plate method (the Wilhelmy method). In the present invention, the surface tension refers to the surface tension value (mN/m) determined by the platinum plate method. It is possible to determine it employing, for example, surface tensiometer CBVP-Z produced by Kyowa Interface Science Co., Ltd.

### (Degassing Process)

The concentration of oxygen dissolved in the ink-jet ink of the present invention is preferably at most 2 ppm, but is more preferably at most 1 ppm. When the concentration of oxygen dissolved in an ink-jet ink is at most 2 ppm, cavitation during ink discharging tends to not be generated, whereby it is easier to prepare an ink which realizes targeted ejection.

Methods to regulate dissolved oxygen concentration are not particularly limited and include a method in which ink-jet ink is degassed under reduced pressure, a method in which degassing is achieved via exposure to ultrasonic waves, and a method in which a hollow fiber film for degassing is employed, as described in JP-A No. 11-209670. Degassing employing the hollow fiber film for degassing is particularly preferred.

### (Recording Media)

It is possible to employ, as usable recording media in the ink-jet recording method employing the ink-jet ink of the present invention, various types of paper, film, fabric, wood, and ink-jet recording media. However, it is preferable that recording media are printing coated papers or non-absorptive recording media.

### (Printing Coated Papers)

Printing coated papers, as described herein, refer to coated paper which is frequently employed in printing, and prepared in such a manner that a high or medium quality paper is employed as a base paper, and after applying pigments such as white clay onto the paper surface, a calendering finis is applied to enhance surface smoothness. By the above treatment, enhanced are the degree of whiteness, smoothness, the acceptance of printing inks, reproduction of dots, print glossiness, and printing opacity. Based on the coated amount, classification is made to art paper, coated paper, and lightweight coated paper, while based on glossiness of paper, classification is made to gloss based, dull based, and matte based.

"Art paper" is a coated paper at a coated weight of about 20 g/m₂ on one side, and is commonly prepared in such a manner that after applying pigments onto the surface of the paper, calendering finish is conducted. Available paper types include special art, medium art, matte (delustered), art, one side art (single side coated), and both art (both sides coated). Specifically available are OK KINFUJI N, SATIN KINFIJI N, SA KINFUJI, ULTRASATIN KINFUJI N, OK ULTRA AQUASATIN, OK KINFUJI KATAMEN, N ART POST, NK TOKU RYOMEN ART, RAICHO SUPER ART N, RAICHO SUPER ART MN, RAICHO ART N, RAICHO DULL ART N, HIGH MCKINLEY ART, HIGH MCKINLEY MATTE, HIGH MCKINLEY PURE DULL ART, HIGH MCKINLEY SUPER DULL, HIGH MCKINLEY ELEGANCE, and HIGH MCKINLEY DEEP MATTE.

The amount coated onto the coated paper is approximately 10 g/m² per one side. Commonly, the coated paper is produced via processing employing a coater arranged in the process of a paper making machine. The coated amount is less than that of art paper and the smoothness is slightly inferior to art paper, while it exhibits advantages such as low cost and light weight. Further, available are types of coated papers such as a light weight coated or slightly coated paper in which the coated amount is further reduced. Specific examples of such coated papers include POD GLOSS COAT, OK TOP COAT+, OK TOP COAT S, AURORA COAT, MU COAT, MU WHITE, RAICHO COAT N, UTRILLO COAT, PEARL COAT, WHITE PEARL COAT, POD MATTE COAT, NEW AGE, NEW AGE W, OK TOP COAT MATTE N, OK ROYAL COAT, OK TOP COAT DULL, Z COAT, SILVER DIA, YU LIGHT, NEPTUNE, MU MATTE, WHITE MU MATTE, RAICHO MATTE COAT N, UTRILLO GLOSS MATTE, NEW V MATTE, and WHITE NEW V MATTE.

### (Non-Absorptive Recording Media)

It is possible to employ, as a non-absorptive medium, various types of films which are commonly employed. Examples thereof include polyester film, polyolefin film, polyvinyl chloride film, and polyvinylidene chloride film. Further, employed may be resin coated paper, which is a photographic paper base, as well as UPO paper, which is a synthetic paper.

### (Ink-Jet Recording Method)

In the ink-jet recording method of the present invention, featured is a method, in which the ink-jet ink of the present invention is discharged onto a recording medium and the resulting ink is cured via exposure to active energy rays, is featured, or featured is the ink-jet ink of the present invention which is discharged onto a recording medium, and after curing the resulting ink via exposure to active energy rays, drying is performed.

An active energy ray exposure method will now be described.

### (Active Energy Ray Exposure)

### <Active Energy Rays>

Examples of the active energy rays, described in the present invention, include electron beams, ultraviolet rays, α rays, β rays, γ rays, and X-rays. In view of danger to the human body, electron beams and ultraviolet rays are preferred, since they are easily handled and are widely used in industry. In the present invention, the ultraviolet rays are particularly preferred.

When electron beams are employed, their exposure dose is preferably in the range of 0.1 - 30 Mrad. When he dose is less than 0.1 Mrad, it is difficult to attain sufficient exposure effects, while when it exceeds 30 Mrad, supports may deteriorate. Accordingly, an exposure dose beyond the above range is not preferred.

When ultraviolet rays are employed, employed as a light source may be conventional ones known in the art such as low, medium, and high pressure mercury lamps having an operating pressure of several hundred Pa to 1 MPa, metal halide lamps, xenon lamps having a light emission wavelength of the ultraviolet range, cold-cathode tubes, hot-cathode tubes, and LEDs.

### <Light Exposure Conditions after Ink Deposition>

As exposure conditions of active energy rays, active energy rays are preferably exposed 0.001 - 1.0 second after deposition of ink onto the recording medium, but more preferably 0.001 - 0.5 second. In order to form highly detailed images, specifically, it is essential that exposure timing is as short as possible.

### (Exposure Method of Active Energy Rays)

With regard to exposure methods of active energy rays, a basic method is disclosed in JP-A No. 60-132767. Based on that, light sources are arranged on both sides of a head unit and the head and the light source are scanned via a shuttle system. Exposure is carried out so that a definite period of time elapses after ink deposition. Further, curing is completed employing another light source which is not driven. U.S. Patent No. 6,145,979 discloses, as an exposure method, a method employing optical fibers and a method in which a collimated light source is incident to the specular surface arranged on the side surface of a head and ultraviolet rays are exposed onto the recording section. In the ink-jet recording method of the present invention, it is possible to employ any of these methods.

Further, a method, in which active energy ray exposure is divided into two stages and active energy rays are exposed 0.001 - 2.0 seconds after ink deposition according to the above method, and subsequently, active energy rays are also exposed, is also one of the preferred embodiments. By dividing active energy ray exposure into two stages, it is possible to retard adverse contraction of recording medium which occurs during curing of ink.

### (Drying after Curing Treatment)

In the ink-jet recording method of the present invention, an ink-jet ink discharged onto a recording medium is cured via exposure to active energy rays. Thereafter, to remove unnecessary water-soluble organic solvents, drying is conducted.

Ink drying methods are not particularly limited, and examples thereof include a method in which drying is conducted in such a manner that the rear side of a recording medium is brought into contact with a heating roller or a flat heater, a method in which heated air is blown onto a print surface employing a dryer, or a method in which volatile components are removed via a reduced pressure treatment. These methods may be employed individually after appropriate selection or in combinations of them.

### (Printer Members)

As members employed in the ink-jet printer used in the ink-jet recording method of the present invention, in order to minimize exposure onto the head surface via diffused reflection of actinic radiation such as ultraviolet rays, preferred are those which exhibit low transmittance and reflectance to active energy rays.

Further, it is preferable that a shutter is mounted on the exposure unit. For example, when ultraviolet rays are employed, the illuminance ratio at an open shutter to a closed shutter (opened shutter/closed shutter) is preferably at least 10, is more preferably at least 100, but is further more preferably 10,000.

An ink-jet printer employed in the ink-jet image recording method of the present invention will now be described.

### (Ink-Jet Printer)

As an employable ink-jet printer in the present invention, listed is an apparatus composed, for example, of a platen which draws and supports the rear side (the side opposite the image forming side) of a sheet of recording media on its upper surface so that images are formed horizontally, recording heads which discharge inks from discharge orifices of nozzles toward a recording media, a carriage which carries these recording heads as well as an exposure means which emits active light rays and moves in the scanning direction during image formation, a driving circuit board loaded in the carriage, which drives the above carriage, a guiding member which is placed along the scanning direction and guides the movement of the carriage, a linear scale which is placed along the scanning direction, while an optical pattern is arranged in the longitudinal direction, and a linear encoder sensor which reads the optical pattern and outputs the readings as clock signals.

### (Recording Heads)

Employed recording heads (ink-jet printing heads) may be in either an on-demand system or a continuous system. Further, listed as a discharge system may be an electric-mechanical conversion system (for example, a single cavity type, a double cavity type, a vendor type, a piston type, a share mode type, and a shared wall type), an electric-thermal conversion system (for example, a thermal ink-jet type and a BUBBLE JET (a registered trade name) type, an electrostatic suction system (for example, an electric-field controlling type and a slit jet type), and an electric discharge system (for example, a spark jet type). Of these, the electrical-mechanical conversion system is preferred, but any of the discharge systems may be employed.

### EXAMPLES

The present invention will now be specifically described with reference to examples, however the present inversion is not limited thereto. "Parts" or "%" employed in the examples represents "parts by weight" or "% by weight" unless otherwise specified.

### «Synthesis of Polymers»

### (Synthesis of Side Chain Modified Compounds)

### (Synthesis of Side Chain Modified Compound a1)

Side Chain Modified Compound a1 was synthesized based on the following reaction formula.

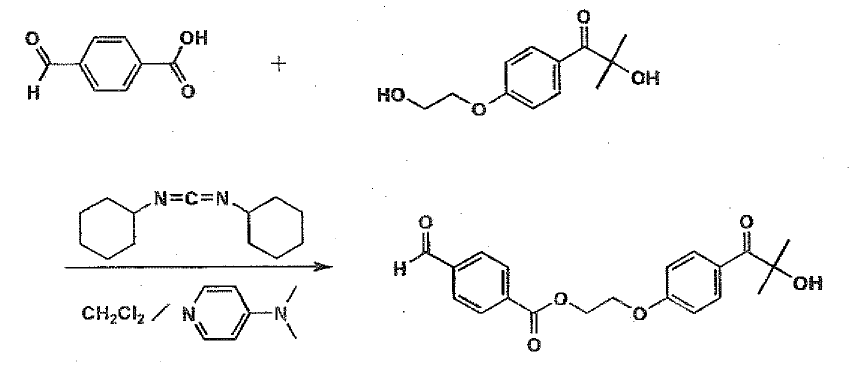

In a 1 L three-necked flask, were placed 50 g of terephthalaldehydic acid, 75 g of IRGACURE 2959 (produced by Ciba Specialty Chemicals Co.), 33 g of 4-dimethylaminopyridine, and 500 ml of dichloromethane. After stirring at room temperature for a while, 75 g of dicyclohexylcarbodiimide was added over 10 minutes while ice-cooling the reaction vessel, and under continuous ice-cooling of the reaction vessel, stirring was continued for 10 minutes, and after return to room temperature, stirring was continued for an additional 10 hours. Dicyclohexylurea produced by the reaction was removed via filtration. After adding an aqueous saturated sodium hydrogen carbonate solution to the filtrate, an organic layer was extracted by adding ethyl acetate, and was dehydrated over one night via magnesium sulfate. After removing solvents by vacuum distillation, the residue was purified employing a silica gel, whereby targeted Side Chain Modified Compound a1 was prepared. The prepared weight was 81 g at a yield of 67%.

### (Synthesis of Side Chain Modified Compound a2)

Side Chain Modified Compound a2 was synthesized based on the following reaction formula.

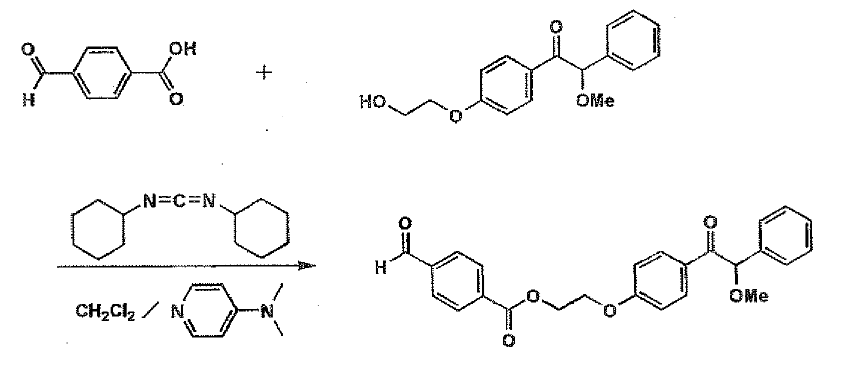

Side Chain Modified Compound a2 was prepared in the same manner as above Side Chain Modified Compound a1, except that IRGACURE 2959 was replaced with benzoin ether.

### (Synthesis of Side Chain Modified Compound a3)

Side Chain Modified Compound a3 was synthesized based on the following reaction formula.

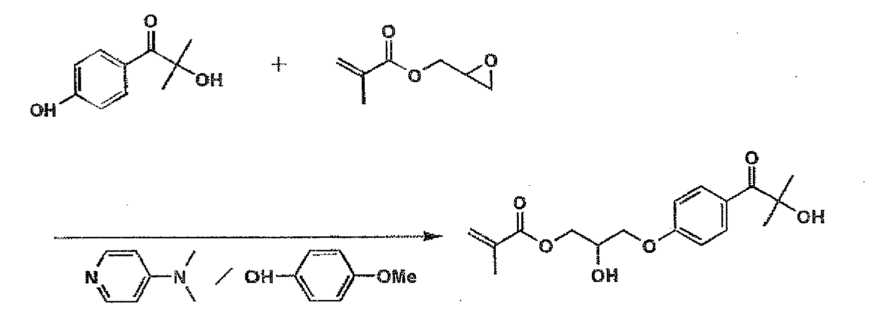

In a 500ml three-necked flask, were placed 50 g of glycidyl methacrylate, 43 g of 4-hydroxyphenyl-(2-hydroxy-2-propyl)ketone, 2.2 g of 4-dimethylaminopyridine, and 0.3 g of p-methoxyphenol as a polymerization inhibitor, and the resulting mixture was stirred at 85 °C for 8 hours. To the reaction solution, added was 250 g of a 5% by weight aqueous sodium carbonate solution and the resulting mixture was stirred for one hour. Subsequently, after extracting the organic layer by adding ethyl acetate, dehydration was affected by adding magnesium carbonate to the organic layer. After removing solvents via vacuum distillation, the residue was purified employing a silica gel column, whereby Side Chain Modified Compound a3 was obtained. The prepared weight was 85 g at a yield of 75%.

### (Synthesis of Side Chain Modified Compound b1)

Side Chain Modified Compound b1 was synthesized based on the following reaction formula.

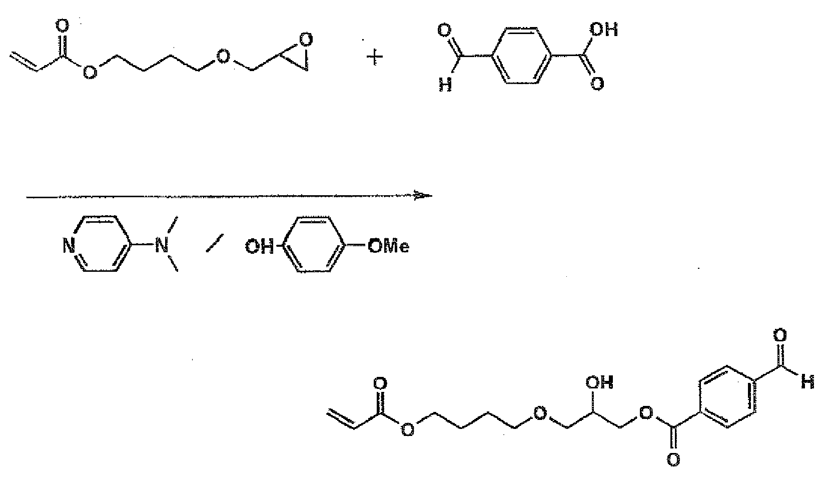

In a 500ml three-necked flask, were placed 60 g of 4-hydroxybutyl acrylate glycidyl ether (prepared by Nippon Kasei Chemical Co., Ltd.), 60 g of terephtalaldehyde acid, 1.8 g of 4-dimethylaminopyridione, and 0.4 g of p-methoxyphenol as a polymerization initiator), and the resulting mixture was stirred at 85 °C for 8 hours. To the reaction solution, added was 250 g of a 5% by weight aqueous sodium carbonate solution and the resulting mixture was stirred for one hour. Subsequently, after extracting the organic layer by adding ethyl acetate, dehydration was performed by adding magnesium carbonate to the organic layer. After removing solvents via vacuum distillation, the residue was purified employing a silica gel column, whereby targeted Side Chain Modified Compound b1 was obtained. The prepared weight was 75 g at a yield was 71%.

### (Synthesis of Polymer A1)

Into a 1 L separable flask, placed were 100 g of saponified polyvinyl acetate, at a saponification ratio of 98% and a degree of polymerization of 300, and 530 g of ion-exchanged water, and the resulting mixture was heated at 90 °C while stirring, whereby saponified polyvinyl acetate was dissolved. After cooling the resulting solution to 60 °C, 175 g of isopropyl alcohol, 24 g of Side Chain Modified Compound a1, and 6.5 g of phosphoric acid were added, and the resulting mixture was stirred for 10 hours. The reaction solution was cooled to 45 °C and 100 g of an ion-exchange resin (DIAION WA20, produced by Mitsubishi Chemical Corp.) was added and the resulting mixture was stirred for 12 hours. Thereafter, the ion-exchange resin was removed via filtration, whereby Polymer A1, at a conversion ratio of 3 mol%, which had saponified polyvinyl alcohol as a main chain, was prepared.

### (Synthesis of Polymer A2)

A 15% by weight Polymer A2 solution was prepared in the same manner as above Polymer A1, except that the degree of polymerization of saponified polyvinyl acetate was changed to 500.

### (Synthesis of Polymer A3)

A 15% by weight Polymer A3 solution was prepared in the same manner as above Polymer A1, except that Side Chain Modified Compound a1 was replaced with Side Chain Modified Compound a2.

### (Synthesis of Polymer A4)

Under a flow of nitrogen, 30 g of Side Modified Compound a3, 100 g of methyl methacrylate, 70 g of acrylic acid, and 400 g of ethyl acetate were placed in a 1 L separable flask, and the resulting mixture was heated at 80 °C. Subsequently, 2 g of azobisisobutyronitrile was added over one hour, and stirring was continued for an additional 5 hours. Thereafter, 0.2 g of azobisisobutyronitrile was further added and the resulting mixture was heated to 85 °C followed by heating for one hour.

From the polymer solution prepared by the above reaction, solvents were removed via vacuum distillation. Subsequently, 85 g of dimethylaminoethanol and 1,600 g of ion-exchanged water were added to the residue and the resulting compound was dissolved, whereby a 15% by weight aqueous solution of Polymer A4, at a ketone modification ratio of 4.5 mol%, having poly(meth)acrylate as a main chain, was prepared. In addition, the weight average molecular weight of Polymer A4 was determined via GPC, being in 32,000.

### (Synthesis of Polymer B1)

Into a 1 L separable flask, placed were 71 g of saponified polyvinyl acetate at a saponification ratio of 98% and a degree of polymerization of 300 and 408 g of ion-exchanged and the resulting mixture was dissolved at 90°C while stirring. After cooling the resulting solution to 60 °C, 90 g of isopropyl alcohol and Side Chain Modified Compound b1 and 4.5 g of phosphoric acid were added and the resulting mixture was stirred for 10 hours. The reaction solution was cooled to 40 °C and 60 g of an ion-exchange resin (DIAION WA20, produced by Mitsubishi Chemical Corp.) Thereafter, the ion-exchange resin was removed via filtration, whereby a 15% by weight aqueous solution of Polymer "B1" at a modification ratio of Side Chain Modified Compound "b1" of 3 mol%, having saponified polyvinyl acetate as a main chain was prepared.

### (Synthesis of Polymer B2)

A 15% by weight Polymer B2 solution was prepared in the same manner as above, except that the degree of polymerization of saponified polyvinyl acetate was changed to 500.

### (Synthesis of Polymer B3)

Under a flow of nitrogen, 60 g of acrylic acid, 140 g of methyl methacrylate, and 400 g of ethyl acetate were placed in a 1 L separable flask, and the resulting mixture was heated to 80 °C. Subsequently, 2 g of azobisisobutyronitrile was added over one hour, and stirring was continued for an additional 5 hours A Thereafter, 0.2 g of azobisisobutyronitrile was further added and the resulting mixture was heated to 85 °C, followed by heating for one hour.

The resulting polymer solution was cooled to 60 °C, and 23 g of 4-hydroxybutyl acrylate glycidyl ether (produced by Nippon Kasei Chemical Co., Ltd.), 20 g of pyridine, and 0.1 g of p-methoxyphenol as a polymerization initiator) were added, followed by stirring for 24 hours.

From the polymer solution prepared by the above reaction, solvents were removed via vacuum distillation. Subsequently, 75 g of dimethylaminoethanol and 1,700 g of ion-exchanged water were added to the residue and the resulting compound was dissolved, whereby a 15% by weight aqueous solution of Polymer B3, at a modification ratio of the polymerizable group of 5 mol%, having poly(meth)acrylate as a main chain, was prepared. In addition, the weight average molecular weight of Polymer B3 was determined via GPC, resulting in 32,000.

### «Preparation of Pigment Dispersion»

### (Yellow Pigment Dispersion)

The following additives were mixed and the resulting mixture was dispersed employing a sand grinder loaded with 0.5 mm zirconia beads at a volume ratio of 50%. Subsequently, ion-exchanged water was added, whereby a yellow pigment dispersion at a yellow pigment content of 10% was prepared.

| | |
|---|---|
| C.I. Pigment Yellow 74 | 95 g |
| DEMOL C (produced by Kao Corp.) | 65 g |
| Ethylene glycol | 100 g |
| Ion-exchanged water | 120 g |

### (Preparation of Magenta Pigment Dispersion)

The following additives were mixed and the resulting mixture was dispersed employing a sand grinder loaded with 0.5 mm zirconia beads at a volume ratio of 50%. Subsequently, ion-exchanged water was added, whereby a magenta pigment dispersion, at a magenta pigment content of 10%, was prepared.

| | |
|---|---|
| C.I. Pigment Red 122 | 10 g |
| JOHNCRYL 61 (acryl styrene based resin dispersing agent, produced by Johnson Co.) | 3 g |
| Glycerin | 15 g |
| Ion-exchanged water | 72 g |

The following additives were mixed and the resulting mixture was dispersed employing a sand grinder loaded with 0.5 mm zirconia beads at a volume ratio of 50%. Subsequently, ion-exchanged water was added, whereby a cyan pigment dispersion, at a cyan pigment content of 10%, was prepared.

| | |
|---|---|
| C.I. Pigment Blue 15 : 3 | 100 g |
| DEMOL C (described above) | 68 g |
| Ethylene glycol | 100 g |
| Ion-exchanged water | 125 g |

### (Preparation of Black Pigment Dispersion)

The following additives were mixed and the resulting mixture was dispersed employing a sand grinder loaded with 0.5 mm zirconia beads at a volume ratio of 50%. Subsequently, ion-exchanged water was added, whereby a black pigment dispersion, at a black pigment content of 10%, was prepared.

| | |
|---|---|
| CARBON BLACK #8500 (produced by Tokai Carbon Co., Ltd.) | 120 g |
| JOHNCRYL 62 (produced by Johnson Polymer Co.) | 59 g |
| LEVENOL WX (produced by Kao Corp.) | 3 g |
| Ethylene glycol | 100 g |
| Ion-exchanged water | 300 g |

### «Preparation of Ink-Jet Ink»

By employing each of the polymers and the pigment dispersions prepared as above, an ink-jet ink was prepared based on the following method.

### (Preparation of Ink 1-1)

| | |
|---|---|
| Polymer A1 (as solids) | 0.6 part |
| Polymer B1 (as solids) | 1.4 parts |
| Solvent: ethylene glycol | 20 parts |
| Solvent: 2-pyrolidinone | 15 parts |
| Solvent: 1,2-hexanediol | 5 parts |
| Activator: BYK347 (produced by BYK-Chemie GmbH) | 1 part |
| Yellow pigment dispersion (as solids) | 3 parts |

Further, ion-exchanged water was added to bring the total volume to 100 parts, whereby Ink 1-1, which was the ink-jet ink of the present invention, was prepared.

### (Preparation of Ink 1-2)

Ink 1-2, which was an ink-jet ink as a comparative example, was prepared in the same manner as Ink 1-1, except that no Polymer "A1" was employed, one part of IRGACURE 2959 (produced by Ciba Specialty Chemicals Co.) was employed as a photoinitiator, and the added amount of Polymer B1 was changed to two parts so that the total amount of polymers was the same as Ink 1-1.

### (Preparation of Ink 1-3)

Ink 1-3, which was a comparative ink-jet ink, was prepared in the same manner as above Ink 1-2, except that the added amount of Polymer B1 was changed to three parts.

### (Preparations of Inks 2-1 - 6-3)

Each of Inks 2-1 - 2-3, 3-1 - 3-3, 4-1 - 4-3, 5-1 - 5-3, and 6-1 - 6-3 was prepared in the same manner as each of above Ink 1-1 - 1-3, except that the type of Polymer A, the type and added amount of Polymer B, and the type and added amount of the pigment were changed as listed in Table 1.

### (Preparation of Ink 7)

| | |
|---|---|
| Polymer A1 (as solids) | 3 parts |
| Acryl oligomer: NK ESTER A-TMPT-9EO (produced by Shin-Nakamura Chemical Co., Ltd.) | 5 parts |
| Acryl monomer: NK ESTER A-200 (produced by Shin-Nakamura Chemical Co., Ltd.) | 5 parts |
| Solvent: ethylene glycol | 20 parts |
| Solvent: 2-pyrolidinone | 15 parts |
| Solvent: 1,2-hexanediol | 5 parts |
| Activator: BYK347 (produced by BYK-Chemie GmbH) | 1 part |
| Magenta pigment dispersion (as pigment part) | 2.5 parts |

Further, ion-exchanged water was added to bring the total volume to 100 parts, whereby Ink 7, which was the ink-jet ink of the comparative example, was prepared.

### (Preparation of Ink 8)

Ink 8, which was the ink-jet ink of the comparative example, was prepared in the same manner as above Ink 7, except that Polymer A1 was replaced with Polymer A4.

**Table 1**

| Ink No. | Polymer A | | | | | Polymer B | | | | | Photo-polymerisation Initiator | | Colorant | | Remarks |
|---|---|---|---|---|---|---|---|---|---|---|---|---|---|---|---|
| | Type | Main Chain | *2 "a" | *1 (mol%) | ** | Type | Main Chain | *2 "b" | *1 (mol%) | ** | Type | ** | Type | ** | |
| 1-1 | A1 | PVA300 | a1 | 3.0 | 0.6 | B1 | PVA300 | b1 | 3.0 | 1.4 | - | - | Y Pigment | 3.0 | Inv. |
| 1-2 | - | - | - | - | - | B1 | PVA300 | b1 | 3.0 | 2.0 | Irg.2959 | 1.0 | Y Pigment | 3.0 | Comp. |
| 1-3 | - | - | - | - | - | B1 | PVA300 | b1 | 3.0 | 3.0 | Irg.2959 | 1.0 | Y Pigment | 3.0 | Comp. |
| 2-1 | A2 | PVA500 | a1 | 3.0 | 0.4 | B2 | PVA500 | b1 | 3.0 | 1.2 | - | - | M Pigment | 2.5 | Inv. |
| 2-2 | - | - | - | - | - | B2 | PVA500 | b1 | 3.0 | 1.6 | Irg.2959 | 1.0 | M Pigment | 2.5 | Comp. |
| 2-3 | - | - | - | - | - | B2 | PVA500 | b1 | 3.0 | 2.5 | Irg.2959 | 1.0 | M Pigment | 2.5 | Comp. |
| 3-1 | A3 | PVA300 | a2 | 3.0 | 0.6 | B1 | PVA300 | b1 | 3.0 | 1.4 | - | - | C Pigment | 2.0 | Inv. |
| 3-2 | - | - | - | - | - | B1 | PVA300 | b1 | 3.0 | 2.0 | Irg.2959 | 1.0 | C Pigment | 2.0 | Camp. |
| 3-3 | - | - | - | - | - | B1 | PVA300 | b1 | 3.0 | 3.0 | Irg.2959 | 1.0 | C Pigment | 2.0 | Comp. |
| 4-1 | A4 | PMA | a3 | 4.5 | 1.0 | B3 | PMA | BA | 5.0 | 2.0 | - | - | K Pigment | 1.5 | Inv. |
| 4-2 | - | - | - | - | - | B3 | PMA | BA | 5.0 | 3.0 | Irg.2959 | 1.0 | K Pigment | 1.5 | Comp. |
| 4-3 | - | - | - | - | - | B3 | PMA | BA | 5.0 | 4.0 | Irg.2959 | 1.0 | K Pigment | 1.5 | Comp. |
| 5-1 | A4 | PMA | a3 | 4.5 | 0.8 | B1 | PVA300 | b1 | 3.0 | 1.7 | - | - | C Pigment | 2.0 | Inv. |
| 5-2 | - | - | - | - | - | B1 | PVA300 | b1 | 3.0 | 2.0 | Irg.2959 | 1.0 | C Pigment | 2.0 | Comp. |
| 5-3 | - | - | - | - | - | B1 | PVA300 | b1 | 3.0 | 3.0 | Irg.2959 | 1.0 | C Pigment | 2.0 | Comp. |
| 6-1 | A1 | PVA300 | a1 | 3.0 0 | 0.6 | B3 | PMA | BA | 5.0 | 2.4 | - | - | M Pigment | 3.0 | Inv. |
| 6-2 | - | - | - | - | - | B3 | PMA | BA | 5.0 0 | 3.0 | Irg.2959 | 1.0 | M Pigment | 3.0 | Comp. |
| 6-3 | - | - | - | - | - | B3 | PMA | BA | 5.0 | 4.0 | Irg.2959 | 1.0 | M Pigment | 3.0 | Comp. |
| 7 | A1 | PVA300 | a1 | 3.0 | 3.0 | - | - | - | - | - | - | - | M Pigment | 2.5 | Comp. |
| 8 | A4 | PMA | a3 | 4.5 | 3.0 0 | - | - | - | - | - | - | - | M Pigment | 2.5 | Comp, |

| | | | | | | | | | | | | | | | |
|---|---|---|---|---|---|---|---|---|---|---|---|---|---|---|---|
| *1: side chain modification ratio, *2: Side Chain, **: Added Amount (%) Inv.: Present Invention, Comp.: Comparative Example | | | | | | | | | | | | | | | |

In addition, each of the additives represented by an abbreviation in Table 1 is as follows.

### <Main Chain>

PVA300: saponified polyvinyl acetate (at a degree of polymerization of 300)
PVA500: saponified polyvinyl acetate (at a degree of polymerization of 300)
PMA: poly (meth) acrylate

### <Side Chain>

BA: butyl acrylate

### <Photopolymerization Initiator>

Irg. 2959: IRGACURE 2959 (produced by Ciba Specialty Chemicals Co.)

### <Colorants>

Y Pigment: yellow pigment (C.I. Pigment Yellow 74)
M Pigment: magenta pigment (C.I. Pigment Red 122)
C Pigment: cyan pigment (C.I. Pigment Blue 15 : 3)
K Pigment: black pigment (TOKA BLACK #8500 (produced by Tokai Carbon Co., Ltd.))

### <<Image Formation and Evaluation>>

By employing each of the inks prepared as above, each of the following evaluations was conducted.

### (Evaluation of Beading Resistance Employing Line Head Type Ink-Jet Recording Apparatus)

A line head type ink-jet recording apparatus of a 360 dpi recording density was structured by arranging, in a double line, piezo type ink-jet recording heads of a 28 µm nozzle orifice diameter, a 12 pl droplet volume, an 18 kHz maximum driving frequency, 512 nozzles, and a 360 dpi nozzle density. In addition, "dpi", as described in the present invention, expresses the number of dots per 2.54 cm.

Each of the inks was fed to the above recording apparatus, and a 20 cm x 20 cm solid image was printed on cast-coated paper (MIRROR COAT-PLATINA, produced by Oji Paper Co., Ltd.) at a conveyance rate of 400 mm/second in the conveying direction and a recording density of 720 dpi. Active energy rays were exposed 0.1 second after ink deposition from the high pressure mercury lamp arranged behind the ink-jet recording head. Exposure conditions included the following three patterns, and subsequently evaluation was conducted.
Exposure Condition 1 (standard): illuminance of 1.5 W/cm² and exposure energy of 150 mJ/cm²
Exposure Condition 2 (low energy): illuminance of 1.5 W/cm² and exposure energy of 90 mJ/cm²
Exposure Condition 3 (low illuminance): illuminance of 750 mW/cm² and exposure energy of 150 mJ/cm²

The above values of illuminance and exposure energy were determined at a wavelength of 365 nm.

Each of the recording images prepared via the above method was evaluated for beading resistance based on the following criteria. When the rank was equal to or higher than A1, it was evaluated to be at a level of commercial viability.
A3: the image was highly uniform
A2: the image was nearly uniform, but slight mottling due to formation of waviness was noted
A1: the image was generally uniform, but mottling due to formation of waviness was obvious.
B: the entire image exhibited waviness and the density of solid image portions was not uniform

### (Evaluation of Maintenance at Low Humidity Circumstance)

The above line head type ink-jet recording apparatus was placed in an ambience of 20% relative humidity and 20 °C, and each ink was fed into the apparatus. Ink maintenance operations, including an ink sucking process and an ink-jet head sweeping process, were conducted. Immediately after the above operations, a 20 cm x 20 cm solid image was printed on PHOTOLIKE QP PAPER (produced by Konica Minolta Photo Imaging, Inc.) which is a dedicated ink-jet paper, and any absence of discharged ink and angle deviation were evaluated based on the resulting images. The above evaluation was repeated 10 times, and maintenance of each ink at low humidity was evaluated based on the following criteria. When the ranking was A, it was evaluated to be at a level of commercial viability.
A: of 10-time maintenance evaluations, at least 8 times, no obvious white streaking was noted in any portion of the image and neither nozzle lacking nor excessive angle deviation occurred
B: of 10-time maintenance evaluations, at least three times, obvious white streaking was noted in any portion of the image, and nozzle lacking and excessive angle deviation occurred
Table 2 shows the results.

**Table 2**

| Ink No. | Beading Resistance | | | Maintenance Aptitude | Remarks |
|---|---|---|---|---|---|
| | Exposure Condition 1 | Exposure Condition 2 | Exposure Condition 3 | | |
| 1-1 | A3 | A3 | A3 | A | Present Invention |
| 1-2 | B | B | B | A | Comparative Example |
| 1-3 | A2 | A2 | A2 | B | Comparative Example |
| 2-1 | A3 | A3 | A3 | A | Present Invention |
| 2-2 | B | B | B | A | Comparative Example |
| 2-3 | A2 | A2 | A2 | B | Comparative Example |
| 3-1 | A3 | A3 | A1 | A | Present Invention |
| 3-2 | B | B | B | A | Comparative Example |
| 3-3 | A2 | A2 | A2 | B | Comparative Example |
| 4-1 | A2 | A1 | A2 | A | Present Invention |
| 4-2 | B | B | B | A | Comparative Example |
| 4-3 | A1 | B | B | B | Comparative Example |
| 5-1 | A2 | A2 | A2 | A | Present Invention |
| 5-2 | B | B | B | A | Comparative Example |
| 5-3 | A2 | A2 | A2 | B | Comparative Example |
| 6-1 | A3 | A1 | A3 | A | Present Invention |
| 6-2 | B | B | B | A | Comparative Example |
| 6-3 | A1 | B | B | B | Comparative Example |
| 7 | B | B | B | B | Comparative Example |
| 8 | B | B | B | B | Comparative Example |

As can clearly be seen from the results listed in Table 2, images formed by employing the ink-jet ink of the present invention exhibited excellent beading resistance in the line head type ink-jet recording apparatus at a high recording rate, and at low humidity in which water in the ink tended to evaporate, the ink-jet head was maintained as desired. Further, when saponified polyvinyl acetate was employed as the main chain of Polymer A, highly preferred images were formed. Further, when saponified polyvinyl acetate was employed as the main chain of Polymer B, excellent beading resistance was realized under low exposure energy conditions. Still further, when acetophenone was employed as a partial structure of the side chain of Polymer A, excellent beading resistance was realized under low illuminance conditions.

## Claims

1. An ink-jet ink comprising:
Polymer A which comprises a plurality of side chains including a side chain "a" which is capable of producing a radical therein; and
Polymer B which comprises a plurality of side chains including a side chain "b", wherein the side chain "b" has a polymerizable group which has reactivity of addition reaction with the radical produced in the side chain "a" of Polymer A.

2. The ink-jet ink of claim 1,
wherein the side chain "a" comprises a partial structure derived from acetophenone.

3. The ink-jet ink of claim 1,
wherein the side chain "a" comprises a partial structure represented by Formula (1): 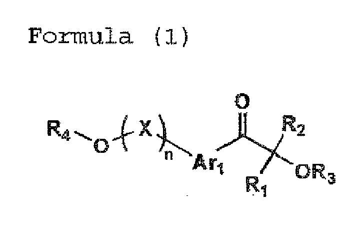 wherein X is a bivalent linking group; n is an integer of 0 or 1; Ar₁ is a substituted or unsubstituted aryl group; R₁ and R₂ each are a hydrogen atom or an alkyl group having 1-3 carbon atoms, provided that R₁ and R₂ may be jointed to form a ring; and R₃ and R₄ each are a hydrogen atom or a substituent.

4. The ink-jet ink of any one of claims 1-3,
wherein Polymer A has a main chain of a saponified polyvinyl acetate.

5. The ink-jet ink of any one of claims 1-3,
wherein Polymer B has a main chain of a saponified polyvinyl acetate.

6. The ink-jet ink of any one of claims 1-3,
wherein each of Polymer A and Polymer B has a main chain of a saponified polyvinyl acetate.

7. The ink-jet ink of any one of claims 1-6,
wherein Polymer B has an weight average molecular weight of 5,000 to 60,000.

8. The ink-jet ink of any one of claims 1-6,
wherein Polymer B has a modification ratio of the side chains therein from 0.5 to 10 mol%.

9. A method of recording an ink-jet image comprising the steps of:
ejecting droplets of ink-jet ink of any one of claims 1-8 onto a recording medium; and
irradiating the droplet of the ink-jet ink ejected on the recording medium with active energy rays.

10. A method of recording an ink-jet image comprising the steps of:
ejecting droplets of the ink-jet ink of any one of claims 1-8 onto a recording medium;
irradiating the droplet of the ink-jet ink ejected on the recording medium with active energy rays; and
subjecting the irradiated droplet of the ink-jet ink ejected on the recording medium with active energy rays to a drying process.
